# EUROPÄISCHE PATENTSCHRIFT

(11) **EP 2 965 008 B1**
(45) Veröffentlichungstag und Bekanntmachung des Hinweises auf die Patenterteilung: **10.04.2019**
(21) Anmeldenummer: 14707118.7
(22) Anmeldetag: 18.02.2014
(51) Int. Cl.: F23N 5/10, F23D 14/36

(54) **GASREGELEINHEIT IN MODULARER BAUWEISE**
GAS CONTROL UNIT IN MODULAR DESIGN
UNITÉ DE CONTRÔLE DE GAZ DANS CONCEPTION MODULAIRE

(30) Priorität: 08.03.2013 DE 102013102354
(43) Veröffentlichungstag der Anmeldung: 13.01.2016
(73) Patentinhaber: EBM-PAPST Landshut GmbH, 84030 Landshut (DE)
(72) Erfinder: VROLIJK, Enno Jan, NL-7751 DX Dalen (NL); KEBER, Roland, 84109 Wörth a. d. Isar (DE); KLINK, Hans-Joachim, 88453 Erolzheim (DE)
(74) Vertreter: Staeger & Sperling Partnerschaftsgesellschaft mbB
(86) Internationale Anmeldenummer: PCT/EP2014/053090
(87) Internationale Veröffentlichungsnummer: WO 2014/135365

(56) Entgegenhaltungen:
- EP-A1- 2 048 439
- EP-A2- 1 106 923
- WO-A1-02/070936
- DE-A1- 2 501 891
- DE-A1- 19 534 285
- DE-A1-102012 102 645
- US-A- 3 877 475
- US-A1- 2007 205 384
- US-B2- 6 793 199

## Beschreibung

Die Erfindung betrifft eine Gasregeleinheit in modularer Bauweise, insbesondere zur pneumatischen Regelung der einem Gasbrenner zuzuführenden Gasmenge, mit einem pneumatisch geregelten und als Modul ausgebildeten Gasregelventil.

Aus dem Stand der Technik sind verschiedene Gasregelventile und Gassicherheitsventile zur Verwendung bei Gas-/Luft-Mischeinheiten und insbesondere bei Gasbrennern bekannt. Die europäische Patentanmeldung EP 0 834 695 A1 offenbart eine Mischvorrichtung für Gasbrenner, in deren Gehäuse Elektromagnetisch betriebene Schließelemente angeordnet sind, um einen Gasfluss zu einem Ventilsitz zu öffnen und zu schließen. Der Ventilsitz selbst ist dabei durch das Gehäuse bzw. daran einteilig ausgebildete Abschnitte der Mischvorrichtung gebildet. Durch die Verwendung von Teilen des Gehäuses der Mischvorrichtung als Ventilsitz muss dieses zumindest in diesem Bereich mit einer besonderen Oberfläche ausgebildet sein, um die Abdichtung gewährleisten zu können. Dies erfordert nach der Fertigung des Gehäuses üblicherweise aufwendige Nacharbeiten am Ventilsitz.

Eine kombinierte Lüfter-Gasventileinheit ist in elektronisch geregelter Form in der DE 10 2007 022 008 A1 offenbart.

Schließlich ist aus der EP 2 048 439 A1 bekannt, einen Gasregler mit Ventilkörper in ein Radialgebläsegehäuse zu integrieren, und den Ventilsitz des ganzen Reglers unmittelbar an einem im Inneren liegenden Gehäuseteil anzuordnen. Weiterer Stand der Technik aus dem technischen Gebiet ist bekannt aus den Druckschriften EP 1 106 923 A2, DE 25 01 891 A1, US 3 877 475 A, DE 10 2012 102 645 A1, WO 02/070936 A1, EP 2 048 439 A1, US 6,793,199B2 und US2007/205384A1.

Bei den bekannten Lösungen ist jedoch nachteilig, dass die Gasregelventile beziehungsweise Gassicherheitsventile speziell auf eine bestimmte Gehäuseform der Mischvorrichtung oder des Gebläses abgestimmt sein müssen und jeweils für nur dieses eine Produkt verwendbar sind. Die elektronisch geregelten Gasventile sind sowohl bezüglich des Bauteils selbst als auch bezüglich der nötigen elektronischen Regelung deutlich kostenintensiver. Für jeden Bautyp müssen spezielle Fertigungseinrichtungen angepasst werden. Ausgehend von dieser Problematik ist es Aufgabe der Erfindung, eine kostengünstige Gasregeleinheit und ein darin verwendbares Gasregelventil bereitzustellen, die in verschiedenen Gehäusetypen, insbesondere in Mischvorrichtungen oder Gebläsen, einsetzbar sind. Ferner ist Aufgabe der Erfindung, die Montagezeit der für die Gasregelung zuständigen Einheiten zu reduzieren und diese leicht auswechselbar zu gestalten.

Diese Aufgaben werden gelöst durch eine Gasregeleinheit nach Patentanspruch 1.

Erfindungsgemäß wird ein pneumatisches, d.h. pneumatisch geregeltes modulares Gasregelventil zusammen mit einem modular ausgebildeten Gassicherheitsventil zu einer Gasregeleinheit in modularer Bauweise kombiniert, insbesondere um eine einem Gasbrenner zuzuführende Gasmenge zu regeln. Das als Modul ausgebildete Gasregelventil ist hierbei in Reihe mit dem als Modul ausgebildeten Gassicherheitsventil derart angeordnet, dass sich das Gassicherheitsventil in Strömungsrichtung gesehen vor dem Gasregelventil befindet.

Durch die Verwendung zweier jeweils modular aufgebauter Bauteile ist die Entwicklungszeit reduziert, da jedes Modul nur einmal entwickelt werden muss, später aber in verschiedenen Endprodukten, beispielsweise in Gebläsegehäusen, Gasventilgehäusen oder Gas-Luft-Krümmern, verwendet werden können. Ferner kann jedes der Module separat gefertigt und in seiner Funktion getestet werden, wobei die Testvorrichtungen für die modularen Ventile wesentlich kleiner sein können, als diejenigen, die im Stand der Technik für die Gesamtbauteile, z.B. Gebläsegehäuse mit daran angeordneten Sicherheitsventilen und einem Gasregelventil, verwendet werden mussten.

Auch ist an der modularen Bauweise von Vorteil, dass mehrere der jeweiligen als Module gebildeten Gasregelventile und Gassicherheitsventile parallel an den jeweiligen Endprodukte anbringbar sind und somit auf einfache und kostengünstige Weise größere Leistungen und Modulationsbreiten erzielbar sind.

In einer bevorzugten Ausführung ist für die Gasregeleinheit nur ein einziges Gassicherheitsventil vorgesehen und dieses als koaxiales Doppel-Sicherheitsventil ausgebildet. Somit kann der Notwendigkeit einer doppelten Abdichtung von im Gasweg angeordneten Bauteilen Rechnung getragen werden, ohne dass der hierfür notwendige Bauraum groß wäre, wie es bei einer Verwendung von zwei separat angeordneten Sicherheitsventilen der Fall wäre. Ferner ist hierbei günstig, das Gassicherheitsventil als Koaxial-Ventil auszubilden, da dieses besonders kompakt baut und die auf dem Bauteil, auf dem die Ventile letztlich angeordnet werden, notwendige Fläche gegenüber den aus dem Stand der Technik bekannten Lösungen geringer ist.

Neben dem pneumatisch geregelten Gasregelventil ist bevorzugt, dass auch das Gassicherheitsventil ein kartuschenartiges Gehäuse mit Mitteln zur lösbaren Befestigung an einem Gasventilgehäuse, Gebläsegehäuse oder Krümmer aufweist. Ferner ist in einer vorteilhaften Ausführungsform vorgesehen, dass an den kartuschenartigen Gehäuseteilen der beiden modularen Ventile jeweils außenseitig angeordnete Dichtmittel zur Abdichtung der Module an dem Gasventilgehäuse, Gebläsegehäuse oder Krümmer vorgesehen sind. Durch die kartuschenartige Ausbildung der jeweiligen Gehäuse kann dies in Form von kostengünstigen Dichtringen erfolgen, die zwischen dem Gasventilgehäuse, Gebläsegehäuse oder Krümmer und dem jeweiligen Modul dichtend eingebracht sind.

Günstig ist ferner, dass an das Gasventilgehäuse, Gebläsegehäuse oder Krümmer hinsichtlich der Materialbeschaffenheit oder Oberfläche keine besonderen Anforderungen nötig sind, da sowohl die Leckagesicherung als auch die Gasregelung ausschließlich über die modularen Gassicherheitsventile und das Gasregelventil erfolgt. Es muss lediglich ein zu den Modulen bzw. kartuschenartigen Gehäusen jeweils passender Aufnahmebereich vorgesehen werden, in den das jeweilige Modul eingesteckt und darin lösbar befestigt wird. In einer besonders einfachen Ausführung weisen die modular gebildeten Ventile und das Gasventilgehäuse, Gebläsegehäuse oder der Krümmer jeweils zueinander passende Gewinde auf. Es sind aber auch andere Befestigungsarten wie Flansch-Verschraubungen, Clipverbindungen, Einsteck-Verbindungen oder weitere im Stand der Technik bekannte Lösungen möglich.

Eine kombinierte Einheit aus Gasventilgehäuse, Gebläsegehäuse oder Krümmer mit dem als Modul ausgebildeten, pneumatisch geregelten Gasregelventil und dem als Modul ausgebildeten Gassicherheitsventil ist hinsichtlich seiner Baugröße um mindestens 30% verkleinert, als bisher verwendete entsprechende Einheiten, bei denen Gasregelventile und Gassicherheitsventile in nicht modularer Bauweise eingesetzt wurden. Bei einer Verwendung eines Doppel-Sicherheitsventils in koaxialer Bauweise, wobei ein zweites Sicherheitsventil eingespart wird, ist die Gesamtbaugrößenreduzierung im Vergleich zu aus dem Stand der Technik bekannten Lösungen mindestens 40%.

Unter "auswechselbares Modul" ist zu verstehen, dass das pneumatisch geregelte Gasregelventil als eigenständige Komponente ausgebildet und mit weiteren Komponenten kombinierbar ist. Durch die Ausbildung als Modul kann das Gasregelventil über eine passende Schnittstelle an beliebigen, dafür vorgesehenen Bauteilen angebracht und wieder entfernt werden.

In einer bevorzugten Ausführung ist zumindest ein Teil des Gehäuses des pneumatisch geregelten Gasventils als eine Einsatzkartusche ausgebildet, wodurch das Gasregelventil-Modul kompakt aufgebaut und in Gehäusen von Gebläsevorrichtungen oder Gas-Luft-Mischvorrichtungen eingesteckt oder eingeschraubt werden kann. Hierbei ist günstig, wenn an dem als Einsatzkartusche ausgebildeten Gehäuse außenseitig ein Gewinde, ein Flansch oder ein vergleichbares lösbares Befestigungsmittel vorgesehen ist. Auch ist vorteilhaft, dass in eine derartige Einsatzkartusche die den Gasfluss beziehungsweise die Gasmenge bestimmenden Bauteile aufgenommen sind, und sich somit, wenn die Kartusche in dem entsprechenden Gehäuse eingeschraubt ist, im Gasströmungsweg befinden. Die Module sowohl des Gasregelventils als auch des Gassicherheitsventils sind jeweils inklusive Ventilkörper und Ventilsitz ausgeführt, so dass die Fertigungsqualität des meist metallischen Gehäuses, in dem sie befestigt werden, weniger kritisch ist. Die "Einsatzkartusche" ist definiert als ein Gehäuseteil, der geeignet ist, in ein anderes Bauteil eingesetzt zu werden, ohne dass an dem anderen Bauteil neben einer entsprechenden Formanpassung weitergehende konstruktionsbedingte Maßnahmen bereitgestellt sein müssen.

Das pneumatische geregelte Gasregelventil ist als Servodruckregler ausgebildet und umfasst einen Ventilkörper, der von einer Membran gehalten und von einer Feder im Ruhezustand in eine Schließstellung gedrückt wird. Die Öffnungsstellung und somit die das Gasregelventil passierende Gasmenge wird pneumatisch über den vom angeschlossenen Gebläse erzeugten Unterdruck und den in entgegengesetzter Richtung wirkenden Gasdruck bestimmt. Durch die besondere Wirkweise sind das Gehäuse, der Ventilkörper und der für den Gasweg am Ventilsitz freigegebene umlaufende Ventilspalt mit derart dimensionierbar, dass bei kleinem Gehäusedurchmesser ein vergleichsweise großer Ventilspalt gebildet werden kann. Bevorzugte Größen liegen hierbei für den Außendurchmesser des Gehäuses bei 30-50mm, für den Außendurchmesser des Ventilkörpers bei 5-15mm und für den Gasweg am Ventilsitz freigegebenen umlaufenden Ventilspalt bei 3 - 5mm.

Andere vorteilhafte Ausbildungen der Erfindung sind in den Unteransprüchen gekennzeichnet, beziehungsweise werden nachstehend zusammen mit der Beschreibung der bevorzugten Ausführung der Erfindung anhand der Figuren näher dargestellt. Es zeigen:
Fig.1a eine seitliche Schnittansicht eines pneumatisch geregelten Gasregelventils;
Fig.1b eine vordere Schnittansicht des pneumatisch geregelten Gasregelventils aus Figur 1a;
Fig.2 eine seitliche Schnittansicht einer Gasregeleinheit mit pneumatisch geregeltem Gasregelventil an einem Krümmer;
Fig. 3a eine seitliche Schnittansicht der Gasregeleinheit aus Figur 2 an einem Gebläsegehäuse; und
Fig. 3b eine vordere Schnittansicht der Gasregeleinheit aus Figur 3a.

Die Figuren zeigen die zum Verständnis der Erfindung notwendigen Bauteile beispielhaft schematisch, wobei gleiche Bauteile mit jeweils gleichen Bezugszeichen gekennzeichnet sind.

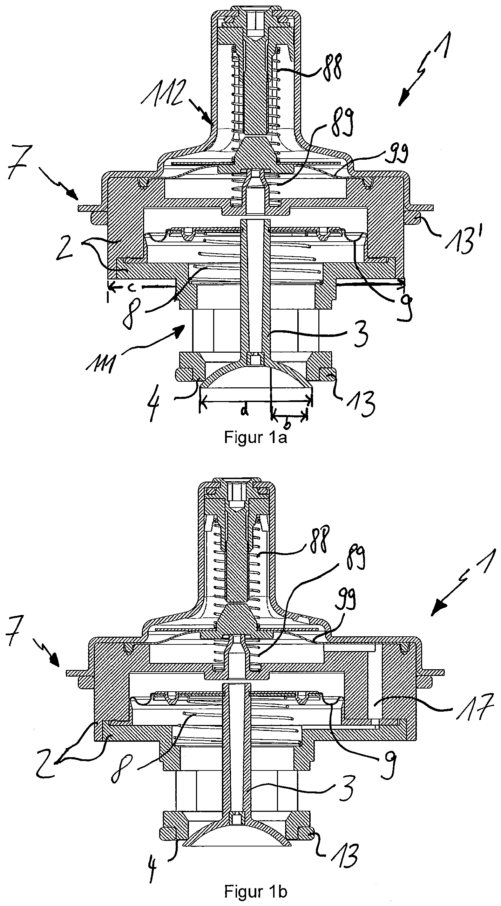

In den Figuren 1a und 1b ist ein pneumatisch geregeltes Gasregelventil 1 mit Gas-Druckregler 111 und Hilfsdruckregler 112 gezeigt, die zusammen einen Servodruckregler bilden. Das Gasregelventil 1 ist in seiner Gesamtheit als auswechselbares Modul ausgebildet, wobei der wesentliche untere Teil des Gehäuses 2 der Teil des Moduls ist, der in das jeweilige Endprodukt (z.B. Gasventilgehäuse 30, Gebläsegehäuse 40, Krümmer 330) eingesteckt und darin fixiert wird. Das Gehäuse 2 ist hierfür als Kartusche 7 gebildet, die im Betrieb im Bereich des Gasstroms angeordnet ist. In der Kartusche 7 sind die die Gasmenge pro Zeit pneumatisch regelnden Bauteile aufgenommen.

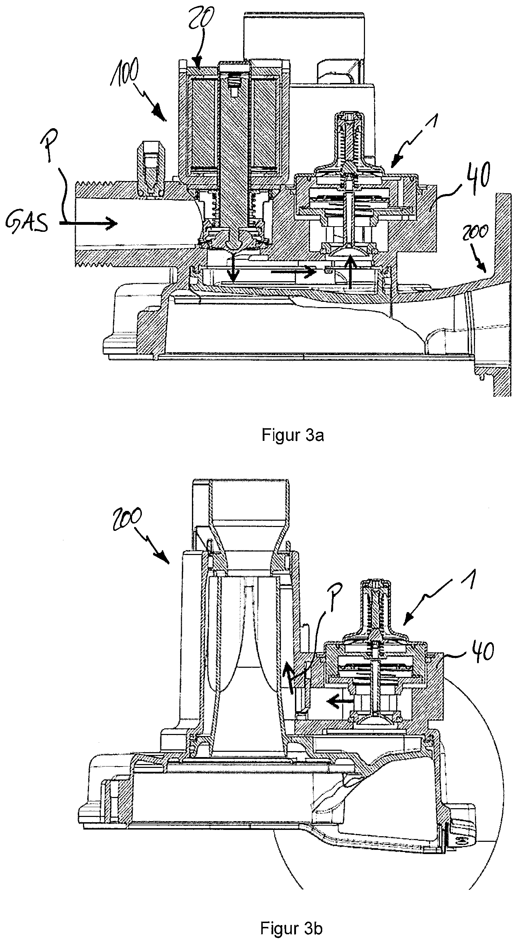

Ein hohl ausgebildeter Ventilkörper 3 ist in dem kartuschenartigen Gehäuse 2 von einer Membran 9 gehalten, wobei die Membran 9 an dem Gehäuse 2 befestigt ist und eine flächige Abgrenzung zu dem Hilfsdruckregler 112 bildet. Ein Kanal 17 (Figur 1b) verbindet den Bereich des Hilfsdruckregler 112 mit dem Bereich des Gas-Druckregler 111, so dass die Bauteile (Federn 88, 89; Membran 99) unterstützend auf den Gas-Hilfsdruckregler 111 wirken können und somit die Regelung des Ventilkörpers 3 exakt einstellbar ist. Das Gehäuse 2 weist einen sich in radialer Richtung zum Zentrum hin erstreckenden Abschnitt auf, der den Ventilsitz 4 für den Ventilkörper 3 bildet. Zwischen dem Gehäuse 2 und der Membran 9 ist eine Feder 8 angeordnet, die in axialer Richtung auf den Ventilkörper 3 wirkt, und diesen gegen den Ventilsitz 4 drückt. An dem Gehäuse 2 sind Dichtungen 13, 13' vorgesehen, die das kartuschenartige Gehäuse 2 im eingebauten Zustand abdichten. Der von dem angeschlossenen Gebläse 200 (Figuren 3a, 3b) erzeugte Unterdruck wirkt auf den Ventilkörper 3 in die entgegengesetzte axiale Richtung und bringt das Gasregelventil 1 gegen die Federkraft der Feder 8 in eine Öffnungsstellung, so dass dem vom Gebläse 200 angesaugten Luftstrom Gas zugemischt wird.

Das Gehäuse 2 weist einen Außendurchmesser c von 50mm, der Ventilkörper einen Außendurchmesser d von 25mm und der für den Gasweg am Ventilsitz 4 freigegebene umlaufende Ventilspalt b eine Öffnungsweite von 5mm auf.

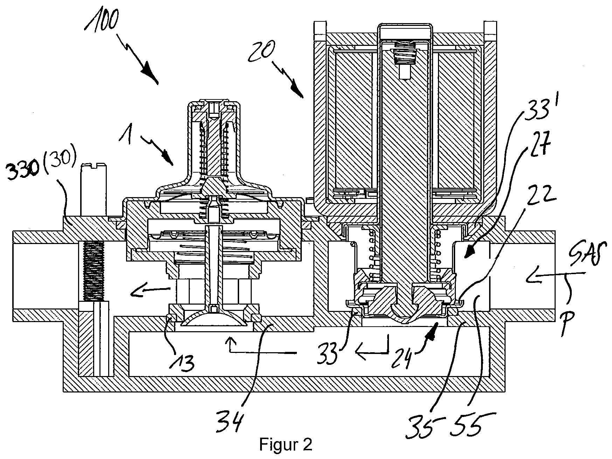

In Figur 2 ist eine Gasregeleinheit 100 zur Regelung der einem Gasbrenner zuzuführenden Gasmenge an einem Krümmer 330 dargestellt, dessen vorgelagerte Erstreckung von dem Gebläse und nachgelagerte Erstreckung hin zum Brenner nicht gezeigt sind. In der Ausbildung nach Figur 2 sind das als Modul ausgebildete, pneumatisch geregelte Gasregelventil 1 aus Figur 1a und ein als Modul ausgebildetes Gassicherheitsventil 20 in Reihe angeordnet, wobei sich in Strömungsrichtung gesehen das Gassicherheitsventil 20 vor dem pneumatisch geregelten Gasregelventil 1 befindet. Sowohl das Gasregelventil 1 als auch das Gassicherheitsventil 20 sind in einem Krümmer 330 bzw. dessen Gehäuse lösbar befestigt. Gegenüber den aus dem Stand der Technik vorbekannten Lösungen sind beide Ventile 1 und 20 als Module ausgebildet, so dass sie bis auf die zur Befestigung vorzusehenden Befestigungsmittel keine hohen Anforderungen an das Gehäuse des Krümmers 330 stellen. Es muss nur der Raum 55 erhöhte Anforderungen erfüllen. Das Gassicherheitsventil 20 ist als koaxiales Doppel-Sicherheitsventil ausgebildet, so dass ein einziges Gassicherheitsventil 20 ausreicht, um die gesetzlich vorgeschriebene doppelte Absicherung gegen Gasaustritt zu gewährleisten. Auch das Gassicherheitsventil 20 weist eine in dem Gasventil 30 angeordnete Einsatzkartusche 27 auf, die durch den unteren Abschnitt des Gehäuses 22 gebildet ist. Die Art und Weise, derartige Gassicherheitsventile 20 elektronisch zu betreiben, um den Ventilkörper 23 von den Ventilsitzen 24 zu lösen und die Doppelabsicherung über die Federn zu gewährleisten ist aus dem Stand der Technik bekannt. Die erfindungsgemäße Verwendung einer Einsatzkartusche 27 am Gassicherheitsventil 20 ermöglicht, dass dieses modular in den Krümmer 330 eingesteckt und daran befestigt werden kann. Als Befestigungsmittel kann vorgesehen sein, zusätzliche Schrauben anzubringen, oder unmittelbar an der Einsatzkartusche 27 und dem Gasventilgehäuse 330 ineinandergreifende Gewinde vorzusehen. Alternativ ist auch ein Verstemmen der Bauteile möglich. Ferner wird die Einsatzkartusche 27 zweifach über Dichtmittel 33 und 33' am Krümmer 330 abgedichtet. Das Gas tritt somit wie durch den Pfeil P dargestellt von rechts seitlich in die Einsatzkartusche 27 ein und wird bei einem vom Ventilsitz 24 gelösten Ventilkörper durch den bereitgestellten Gasdruck zu dem Gasregelventil 1 gedrückt. Dort passiert es den Ventilsitz und wird zum Gasauslass geleitet. In Figur 2 ist das Gasventil 1 in geschlossener Stellung. Zur Definition des Gaswegs weist das Gehäuse des Krümmers 330 entsprechende, die Module aufnehmende Stege 34, 35 auf, an denen die Einsatzkartuschen 7 und 27 jeweils dichtend anliegen. Auch wenn Figur 2 eine Anordnung der Gasregeleinheit auf einem Krümmer 330 zeigt kann diese in identischer Weise auf einem Gasventilgehäuse 30 befestigt sein. Die Figuren 3a und 3b zeigen eine seitliche und vordere Schnittansicht der Gasregeleinheit 100 mit Gasventil 1 und Gassicherheitsventil 20 aus Figur 2 in einem an einem Gebläsegehäuse 40 eingebauten Zustand. Die Regelung der Öffnungsstellung des Gasregelventils 1 und somit der dem angeschlossenen Gebläse 200 zugeführten Gasmenge erfolgt ausschließlich durch die Regelungsgrößen Gasdruck und vor allem Luftdruck. Der Gasdruck wirkt gegen den Ventilkörper 3 und drückt diesen neben der Federkraft der Feder 8 in eine Schließstellung. Die Anordnung des Gasregelventils 1 der Gasregeleinheit 100 erfolgt im Bereich einer Venturidüse des Gebläses 200, wo der von dem Gebläse 200 erzeugte Unterdruck (-p) am geringsten ist. Der von dem Gebläse 200 drehzahlabhängige Unterdruck wirkt auf die Membran 9 des Gasregelventils 1 und öffnet bzw. löst den Ventilkörper 3 von dem Ventilsitz 4 gegen die vorstehend beschriebenen Schließkräfte in vordefinierter Weise, wobei die Regelung der Öffnungsstellung des Ventilkörpers 3 über die Charakteristika der einzelnen Bauteile (Federn, Membran, Ventilkörper) des Gasregelventil 1 voreinstellbar ist. Die Bereitstellung der Gasmenge über das Gassicherheitsventil 20 sowie die Drehzahl des Gebläses 200 sind elektronisch geregelt. Das Gas strömt in Pfeilrichtung P von dem Gaseinlass über das Gassicherheitsventil 20, das Gasregelventil 1 in das Gebläse 200.

Durch die modulare Bauweise des Gasregelventils 1 und der gesamten Gasregeleinheit 100 ist eine besonders kompakte Montagemöglichkeit unmittelbar an dem Gebläse 200 ermöglicht. Auch können die Module einzeln im Wartungs- oder sonstigen Bedarfsfall getauscht werden. Die Module des Gasregelventils 1 und Gassicherheitsventils 20 sind jeweils inklusive Ventilkörper und Ventilsitz ausgeführt, so dass die Fertigungsqualität des metallischen Gebläsegehäuses 40 weniger kritisch ist.

## Patentansprüche

1. Gasregeleinheit in modularer Bauweise zur pneumatischen Regelung der einem Gasbrenner zuzuführenden Gasmenge, umfassend ein als Modul ausgebildetes, pneumatisch geregeltes Gasregelventil (1) und mindestens ein als Modul ausgebildetes Gassicherheitsventil (20); **dadurch gekennzeichnet, dass** das Gasregelventil ein Gehäuse (2) mit Gaseinlass, einen in dem Gehäuse (2) gehaltenen, in axialer Richtung beweglich angeordneten Ventilkörper (3), einen Ventilsitz (4), eine Feder (8), die in der ersten axialen Richtung (Y1) auf den Ventilkörper (3) wirkt umfasst, wobei das Gasregelventil (1) pneumatisch geregelt und in seiner Gesamtheit als auswechselbares Modul ausgebildet ist.

2. Gasregeleinheit nach dem vorigen Anspruch, wobei das als Modul ausgebildete, pneumatisch geregelte Gasregelventil (1) und das als Modul ausgebildete Gassicherheitsventil (20) in Reihe angeordnet sind und das mindestens eine Gassicherheitsventil (20) in Gasströmungsrichtung vor dem Gasregelventil (1) angeordnet ist.

3. Gasregeleinheit nach zumindest einem der vorigen Ansprüche 1 bis 2, **dadurch gekennzeichnet, dass** das als Modul ausgebildete Gassicherheitsventil (20) ein Gehäuse (22), einen Ventilkörper und mindestens einen Ventilsitz (24) aufweist, wobei der mindestens eine Ventilsitz (24) durch Teile des Gehäuses (22) gebildet ist.

4. Gasregeleinheit nach zumindest einem der vorigen Ansprüche 1 bis 3, **dadurch gekennzeichnet, dass** ein einziges Gassicherheitsventil (20) vorgesehen und dieses als Doppel-Sicherheitsventil ausgebildet ist.

5. Gasregeleinheit nach zumindest einem der vorigen Ansprüche 1 bis 4, **dadurch gekennzeichnet, dass** das als Modul ausgebildete, pneumatisch geregelte Gasregelventil (1) und das als Modul ausgebildete Gassicherheitsventil (20) jeweils kartuschenartige Gehäuseteile (7, 27) mit Mitteln zur lösbaren Befestigung an einem Gasventilgehäuse (30), Gebläsegehäuse (40) oder Krümmer (330) aufweisen.

6. Gasregeleinheit nach Anspruch 5, **dadurch gekennzeichnet, dass** an den kartuschenartigen Gehäuseteilen (7, 27) jeweils außenseitig angeordnete Dichtmittel (13, 13', 33, 33') zur Abdichtung der Module an dem Gasventilgehäuse (30), Gebläsegehäuse (40) oder Krümmer (330) vorgesehen sind.

7. Gasregeleinheit nach dem Anspruch 1, **dadurch gekennzeichnet, dass** zumindest ein Teil des Gehäuses (2) als eine Einsatzkartusche (7) ausgebildet ist.

8. Gasregeleinheit nach dem Anspruch 1, **dadurch gekennzeichnet, dass** der Ventilsitz (4) durch Teile des Gehäuses (2) des Gasregelventils (1) gebildet ist.

9. Gebläsegehäuse (40), Gasventilgehäuse (30), oder Krümmer (330) umfassend eine Gasregeleinheit (100) nach einem der vorigen Ansprüche 1 bis 6.

## Claims

1. A gas control unit of modular design for pneumatic control of a quantity of gas to be supplied to a gas burner, the gas control unit comprising a pneumatically controlled gas control valve (1) configured as a module and at least one gas safety valve (20) configured as a module; **characterized in that** the gas control valve comprising a housing (2) having a gas inlet, a valve body (3) held in the housing (2) and arranged movably in an axial direction, a valve seat (4), and a spring (8) acting in the first axial direction (Y1) on the valve body (3), wherein the gas control valve (1) is pneumatically controlled and configured as a whole as a replaceable module.

2. The gas control unit according to the preceding claim, wherein the pneumatically controlled gas control valve (1) configured as a module and the gas safety valve (20) configured as a module are arranged in series, and the at least one gas safety valve (20) is arranged before the gas control valve (1) in a gas flow direction.

3. The gas control unit according to at least one of the preceding claims 1 to 2, **characterized in that** the gas safety valve (20) configured as a module comprises a housing (22), a valve body and at least one valve seat (24), wherein the at least one valve seat (24) is formed by parts of the housing (22).

4. The gas control unit according to at least one of the preceding claims 1 to 3, **characterized in that** a single gas safety valve (20) is provided and said single gas safety valve (20) is configured as a double safety valve.

5. The gas control unit according to one of the preceding claims 1 to 4, **characterized in that** the pneumatically controlled gas control valve (1) configured as a module and the gas safety valve (20) configured as a module each comprise cartridge-like housing parts (7, 27) having means for detachable attachment on a gas valve housing (30), fan housing (40) or manifold (330).

6. The gas control unit according to claims 5, **characterized in that**, on the cartridge-like housing parts (7, 27), sealing means (13, 13', 33, 33') respectively arranged on an outside are provided for sealing the modules on the gas valve housing (30), fan housing (40) or manifold (330).

7. The gas control valve according to claim 1, **characterized in that** at least part of the housing (2) is configured as an insert cartridge (7).

8. The gas control valve according to claim 1, **characterized in that** the valve seat (4) is formed by parts of the housing (2) of the gas control valve (1).

9. A fan housing (40), gas valve (30) or manifold (330) comprising a gas control unit (100) according to one of the preceding claims 1 to 6.

## Revendications

1. Unité de contrôle de gaz dans conception modulaire pour le contrôle pneumatique de la quantité de gaz à amener à un brûleur de gaz, comprenant une vanne de contrôle de gaz (1) contrôlée pneumatiquement, réalisée en tant que module et au moins une vanne de sécurité de gaz (20) réalisée en tant que module ; **caractérisée en ce que** la vanne de contrôle de gaz comprend un boîtier (2) avec entrée de gaz, un corps de vanne (3) agencé mobile dans la direction axiale et retenu dans le boîtier (2), un siège de vanne (4), un ressort (8), qui agit dans la première direction axiale (Y1) sur le corps de vanne (3), dans laquelle la vanne de contrôle de gaz (1) est contrôlée pneumatiquement et réalisée dans son ensemble en tant que module échangeable.

2. Unité de contrôle de gaz selon la revendication précédente, dans laquelle la vanne de contrôle de gaz (1) contrôlée pneumatiquement, réalisée en tant que module et la vanne de sécurité de gaz (20) réalisée en tant que module sont agencées en série et l'au moins une vanne de sécurité de gaz (20) est agencée dans la direction d'écoulement de gaz avant la vanne de contrôle de gaz (1).

3. Unité de contrôle de gaz selon au moins une des revendications précédentes 1 à 2, **caractérisée en ce que** la vanne de sécurité de gaz (20) réalisée en tant que module présente un boîtier (22), un corps de vanne et au moins un siège de vanne (24), dans laquelle l'au moins un siège de vanne (24) est formé par des parties du boîtier (22).

4. Unité de contrôle de gaz selon au moins une des revendications précédentes 1 à 3, **caractérisée en ce qu'**une seule vanne de sécurité de gaz (20) est prévue et celle-ci est réalisée en tant que double vanne de sécurité.

5. Unité de contrôle de gaz selon au moins une des revendications précédentes 1 à 4, **caractérisée en ce que** la vanne de contrôle de gaz (1) contrôlée pneumatiquement, réalisée en tant que module et la vanne de sécurité de gaz (20) réalisée en tant que module présentent respectivement des parties de boîtier de type cartouche (7, 27) avec des moyens pour la fixation amovible au niveau d'un boîtier de vanne de gaz (30), boîtier de soufflante (40) ou coude (330).

6. Unité de contrôle de gaz selon la revendication 5, **caractérisée en ce que** des moyens d'étanchéité (13, 13', 33, 33') agencés respectivement côté extérieur pour l'étanchéification des modules au niveau du boîtier de vanne de gaz (30), boîtier de soufflante (40) ou coude (330) sont prévus au niveau des parties de boîtier de type cartouche (7, 27).

7. Unité de contrôle de gaz selon la revendication 1, **caractérisée en ce qu'**au moins une partie du boîtier (2) est réalisée en tant que cartouche insert (7).

8. Unité de contrôle de gaz selon la revendication 1, **caractérisée en ce que** le siège de vanne (4) est formé par des parties du boîtier (2) de la vanne de contrôle de gaz (1),

9. Boîtier de soufflante (40), boîtier de vanne de gaz (30), ou coude (330) comprenant une unité de contrôle de gaz (100) selon l'une quelconque des revendications précédentes 1 à 6.
